Europäisches Patentamt

European Patent Office

Office européen des brevets

(19)

(11) Veröffentlichungsnummer: **0 386 522**
**A2**

(12) **EUROPÄISCHE PATENTANMELDUNG**

(21) Anmeldenummer: **90103304.3**

(22) Anmeldetag: **21.02.90**

(51) Int. Cl.⁵: **B23B 31/02**

(30) Priorität: **01.03.89 DE 3906424**

(43) Veröffentlichungstag der Anmeldung:
**12.09.90 Patentblatt 90/37**

(84) Benannte Vertragsstaaten:
**AT BE CH DE DK ES FR GB GR IT LI LU NL SE**

(71) Anmelder: **GÖLTENBODT**
**PRÄZISIONS-WERKZEUG-UND**
**MASCHINENFABRIK GmbH & CO.**
**Varnbüler Strasse 18-22**
**D-7250 Leonberg, Höfingen(DE)**

(72) Erfinder: **Der Erfinder hat auf seine Nennung**
**verzichtet**

(74) Vertreter: **Otte, Peter, Dipl.-Ing.**
**Tiroler Strasse 15**
**D-7250 Leonberg(DE)**

(54) **Werkzeugwechsel-Spanneinrichtung.**

(57) Bei einer Werkzeugwechsel-Spanneinrichtung für Werkzeugmaschinen, insbesondere Mehrspindelautomaten, die aus einem Grundhalter als Aufnahme und einem in diesen einsetzbaren, über Plananlage und Zentrierzylinder zentriert aufgenommenen, das Werkzeug tragenden Wechselkopf besteht, wird vorgeschlagen, am Wechselkopf einen zentralen Spannflächenträger vorzugsweise einstückig anzuordnen, der beidseitig einander diametral gegenüberliegende und sich in Querrichtung erstreckende Keilschrägen aufweist, in welche am Grundhalter angeordnete Spannbacken beidseitig eingreifen und so den Wechselkopf in eine feste Anschlagposition einspannen. Hierdurch ergeben sich große Abstützflächen und eine entsprechend sehr gute Richtungsstabilität und Verdrehsicherheit bei gleichzeitiger hoher Zentriergenauigkeit des einzusetzenden Wechselkopfs.

Fig.3

EP 0 386 522 A2

Stand der Technik

Die Erfindung geht aus von einer Werkzeugwechsel-Spanneinrichtung nach dem Oberbegriff des Anspruchs 1.

Solche Spanneinrichtungen sind in vielfältigen Ausführungsformen bekannt; dabei wird bei dem die Gattung vorliegender Erfindung bestimmenden Kupplungs-Spannsystem das das Werkzeug aufnehmende Zapfen-Schaftteil mit einem zylindrischen Vorsprung in die Aufnahme, also die Spindel am Werkzeug eingeschoben, bis zu einer Plananlage.

Zur axialen Sicherung des von dem Zapfen-Schaftteil gebildeten Wechselkopfes enthält der zylindrische Zapfen an diesem eine Querbohrung, in welcher sich ein Pendelbolzen befindet. Hierauf entsprechend ausgerichtet sind in der Aufnahme in entsprechenden, auf die Querbohrung ausgerichteten Quergewinden Spannschrauben und Kegelschrauben angeordnet, so daß durch entsprechende Verschiebung des Pendelbolzens bei Anziehen der Spannschraube die Gesamtheit aus Spannschraube, Kegelschraube und Pendelbolzen einen mehrteiligen Querstift bildet, der durch in ihm angeordnete, kegelstumpfförmig ineinandergreifende Anschlagflächen in sich formschlüssig verspannt ist und so gleichzeitig den Wechselkopf in der Aufnahme sichert. Ein bei dieser Konstellation der Sicherung unvermeidbarer, wenn auch minimaler Verdrehschlupf kann durch die exakte Positionierung eines im Durchmesser angepaßten Positionierstiftes, der dann zusätzlich erforderlich ist, beseitigt werden.

Neben dem komplizierten Aufbau, der für die Spannsicherung des Wechselkopfes sowohl in diesem als auch in der Aufnahme bewegliche Teile vorsieht, kann bei diesem bekannten Spannsystem der Umstand noch problematisch sein, daß eine Voreinstellbarkeit des genauen Werkzeugsitzes im Wechselkopf in axialer Hinsicht jedenfalls mit einfachen Mitteln, also außerhalb der Werkzeugmaschine auf einer optischen Voreinstellbank, nicht realisiert werden kann. Schließlich ist zu berücksichtigen, daß durch das kegelstumpfförmige Ineinandergreifen von Spannschraube, Pendelbolzen und Kegelschraube beim Anziehen in Querrichtung ein bewußtes Heranziehen des Zapfen-Schaftteils an die Aufnahme nur durch einen dann notwendigen Achsversatz von Spannschraube/Kegelschraube und Pendelbolzen möglich ist, wobei die tragenden Kegelflächen jedenfalls nicht gleichmäßig belastet sein können.

Ferner ist es neben den üblichen Steilkegelaufnahmen und ergänzend zu diesen noch bekannt, einen konisch ausgebildeten Werkzeugschaft dadurch in eine entsprechende Bohrung des Grundhalters bis zur Plananlage von Werkzeugkopf und Grundhalter zu spannen, daß eine von einer Spannmutter durch Betätigung von der Rückseite des Grundhalters aus axial in ihre Richtung gezogene Spannstange durch diese Bewegung Kugeln nach außen drückt, so daß diese in entsprechend gearbeitete Ausnehmungen im konischen Werkzeugschaft eindringen. Hierdurch wird der Werkzeugschaft nach innen gezogen, wobei über die Spannstange allerdings eine Kraftumsetzung aus der zunächst axialen Spannbewegung der Spannstange in die hauptsächlich radial ihre Spannkraft zur Auswirkung bringenden Kugeln erforderlich ist. Hierzu sind schräge Gleitflächen in der Spannstangenaufnahme für die Kugeln erforderlich.

Bei diesem Spannsystem ist eine Werkzeugvoreinstellbarkeit im Bereich des Werkzeugwechselkopfes deshalb entbehrlich, aber wegen der komplizierten Spannmimik auch nicht möglich, weil das Werkzeug üblicherweise mit dem Werkzeugkopf einstückig ausgebildet ist.

Der Erfindung liegt die Aufgabe zugrunde, eine Werkzeugwechsel-Spanneinrichtung für Werkzeugmaschinen einerseits in einer besonders einfachen und kostengünstigen Weise, andererseits aber so kräftig und sicher auszuführen, daß sich neben großen Abstützflächen eine sehr gute Richtungsstabilität und zusätzlich die Möglichkeit ergibt, das von dem Wechselkopf aufgenommene Werkzeug getrennt von Aufnahme und Werkzeugmaschine hochgenau auf axiale Position voreinzustellen, beispielsweise mit Hilfe einer optischen Voreinstellbank, falls dies erwünscht ist.

Vorteile der Erfindung

Die Erfindung löst diese Aufgabe mit den kennzeichnenden Merkmalen des Anspruchs 1 und hat den Vorteil, daß bei Beibehaltung der günstigen radialen und axialen Paßflächen, also Plananlage und radiale Fixierung durch Zylinderdurchmesser durch die besonders hohe, zur Einwirkung kommende Spannkraft eine sehr starre Verbindung und ein hervorragender Anpreßdruck gewährleistet sind, und zwar auf Dauer und auch bei rauhem Betrieb.

Die bei vorliegender Erfindung zur Einwirkung kommenden Spannflächen wirken ständig, je nach dem kraftvollen Anziehen von beidseitig wirkenden Spannmuttern, auf Keilflächen ein, so daß sich durch den hohen Anpreßdruck eine gute Stützwirkung des gesamten Aufbaus ergibt, die auch schwere Zerspanung zuläßt.

Ferner ist von besonderem Vorteil, daß die Spannelemente zusätzlich, also in einer Art zweiter Funktion, eine starre Mitnahme gewährleisten, die auch kleinsten Verdrehschlupf vollständig ausschließt.

Ferner verbindet die Erfindung den für sich gesehen bekannten schnellen Wechsel von Werkzeugwechselköpfen mit einer externen optischen Voreinstellbarkeit des eigentlichen Zerspanungswerkzeugs im Wechselkopf, so daß die Schneidkante axial hochgenau auf eine gewünschte vorgegebene Fixposition dosiert werden kann, wobei die Voreinstelleinrichtung eine Referenzbezugsebene beispielsweise aus der Planfläche am Wechselkopf ableiten kann. Eine solche Voreinstellbarkeit läßt sich ohne mühsames Probieren dadurch realisieren, daß man eine zentrale Stellschraube von der Rückseite des Wechselkopfes aus, also dem von diesem aufgenommenen Werkzeug axial gegenüberliegend, so lange betätigt, bis die exakte Axialposition des Werkzeugs erreicht ist. Anschließend kann man das Werkzeug mittels eines geeigneten Zangenfutters fixieren.

Dabei ist ferner noch von besonderem Vorteil der Umstand, daß der Wechselkopf selbst keine beweglichen Teile für die Spannsicherung umfaßt und sich ein besonders kurzer Aushebe- bzw. Wechselweg in axialer Richtung für den Wechselkopf ergibt infolge der besonderen konstruktiven Gegebenheiten. Dies macht diese Entwicklung für die Verwendung bei entsprechend eng bauenden Mehrspindel-Drehautomaten gut geeignet. Alle das Festspannen des Wechselkopfs aktiv realisierenden Elemente befinden sich in der Aufnahme, so daß der Wechselkopf unkompliziert aufgebaut ist und problemlos gehandhabt und der Voreinstellbarkeit seines Werkzeugs zugeführt werden kann.

Von Vorteil ist ferner, daß Spannflächen am Wechselkopf bildende Keilschrägen in Querrichtung verlaufende längere Stützflächen bilden, die von Spannpratzen bzw. Spannbacken, die beidseitig im Grundhalter radial nach innen und außen verschieblich gelagert sind, erfaßt werden, so daß auch im Bereich dieser speziellen Spannanordnung mit normaler Genauigkeit gearbeitet werden kann. Eine solche Spannanordnung rückt sich innerhalb der hier vorauszusetzenden Gegebenheiten sozusagen selbst zurecht und zieht durch die Steilheit der Keilschrägen (30°) am Wechselkopf diesen unter ständiger Aufrechterhaltung der Preßwirkung fest und sicher an die Plananlage.

Durch die in den Unteransprüchen ferner aufgeführten Maßnahmen sind vorteilhafte Weiterbildungen und Verbesserungen der Erfindung möglich. Besonders vorteilhaft ist die Ausbildung eines zentralen Vorsprungs am Zentrierzylinder des Wechselkopfes, der nach außen sich jeweils diametral gegenüberliegend die nasenförmig vorspringenden Keilschrägen lagert, die sich in Querrichtung über die Dicke des Vorsprungs erstrecken, wobei der Vorsprung selbst zentral bis zur Werkzeug aufnahme durchbohrt ist und ein Innengewinde bildet, welches der Aufnahme der Axialstellschraube für die Werkzeugjustierung im Wechselkopf dient.

Zeichnung

Ausführungsbeispiele der Erfindung sind in der Zeichnung dargestellt und werden in der nachfolgenden Beschreibung näher erläutert. Es zeigen:

Fig. 1 in einer Seitendarstellung und zur Hälfte im Längsschnitt eine Ausführungsform einer Werkzeugwechsel-Spanneinrichtung, wobei der Wechselkopf in den Grundhalter eingesetzt ist und

Fig. 2 separat den Wechselkopf in einer etwas anderen Ausführungsform, ebenfalls in Seitenansicht und hälftig im Schnitt.

Fig. 3 zeigt schließlich, ebenfalls in einer Seitendarstellung, eine weitere Ausführungsform von Rundhalter und Wechselhalter mit direktem Kühlmittelanschluß.

Beschreibung der Ausführungsbeispiele

Der Grundgedanke vorliegender Erfindung besteht darin, den Wechselkopf durch sich linear in Querrichtung, aus der Mitte heraus versetzt erstreckende Keilschrägen mit großer Abstützfläche und hieraus resultierender sehr guter Richtungsstabilität in der Aufnahme des Grundhalters zu sichern und festzuspannen, indem diese beidseitigen und sich diametral gegenüberliegenden Keilschrägen von Spannbacken hintergriffen werden, die über entsprechende, also im Winkel komplementär verlaufende Keilschrägen verfügen. Durch das hierdurch bewirkte Aufeinandergleiten der Keilschrägen bei vorzugsweiser steiler Winkelform ergeben sich hervorragende Spannkräfte, beste Zentriergenauigkeit und eine einwandfreie Verdrehsicherung.

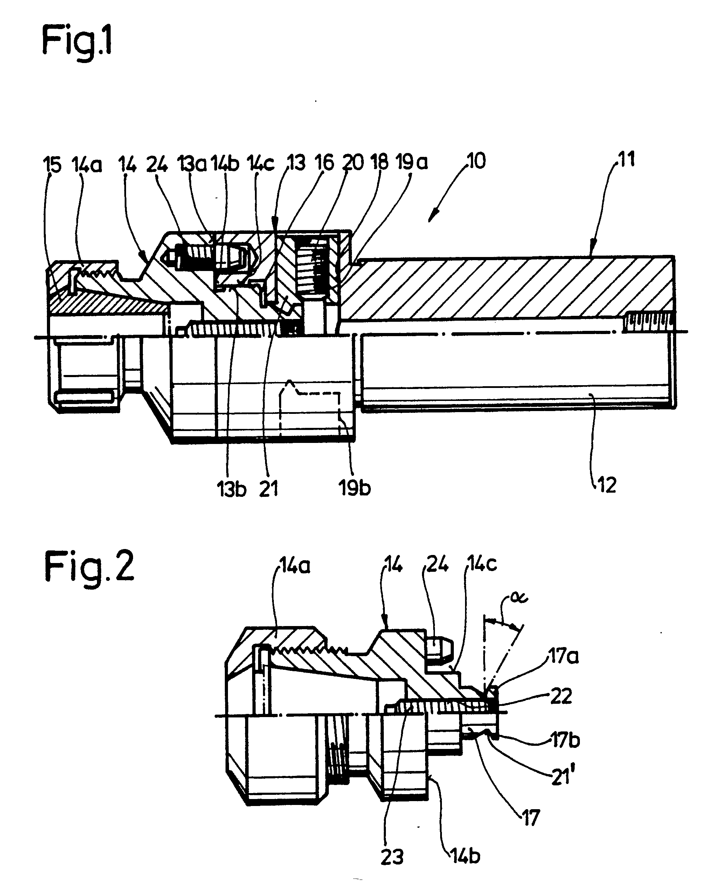

In Fig. 1 ist der Grundhalter der Werkzeugwechsel-Spanneinrichtung 10 mit 11 bezeichnet und umfaßt bei dem dargestellten Ausführungsbeispiel einen hinteren, in der Zeichenebene also rechts angeordneten Zylinder 12, der sich nach links zu einem Aufnahmekopf 13 für den Werkzeugwechselkopf 14 erweitert.

An dieser Stelle ist darauf hinzuweisen, daß es sich versteht, daß die Erfindung nicht auf die in der Zeichnung dargestellte geometrische Formgebung beschränkt ist und, je nach speziellem Anwendungsfall insbesondere im Außenflächenbereich von Wechselkopf und Grundhalter auch anders gestaltet sein kann. Speziell ist hier auf den Zylinderschaft 12 des Grundhalters hinzuweisen, der je nach den Gegebenheiten der die Spanneinrichtung aufnehmenden Werkzeugmaschine ausgebildet sein muß, also auch konisch oder konisch/zylindrisch mit entsprechenden Abmessungen ausgebildet sein kann.

Der Wechselkopf 14 stellt das Aufnahmeteil für ein in ihn einzusetzendes, nicht dargestelltes Werkzeug dar und ist bei dem dargestellten Ausführungsbeispiel ein sogenanntes Zangenfutter; eine in den Wechselkopf 14 eingesetzte und bei Anziehen der Kopfmutter 14a ein eingesetztes Werkstück einspannende und sichernde Spannzange ist mit 15 bezeichnet.

Diese Ausbildungsform und ergänzend hierzu auch die vom Wechselkopf zur Zentrierung und zur Plananlage gebildete Stirnflächen 14b und Zylinderflächen 14c sind bei solchen Werkzeughalterungen üblich und dienen der Zentrierung und Sollanlage des Wechselkopfes.

Aufgenommen und zur Anlage gelangen die erwähnten Stirn-und Zylinderflächen am Wechselkopf 14 an entsprechenden, abgetreppten, durch Bohrungen gebildete komplementäre Flächen im Aufnahmekopf 13 des Grundhalters, nämlich vordere Stirnfläche 13a und zylindrische Bohrungsinnenpaßfläche 13b. In den Eckbereichen vorgesehene Spalte sind Freigaben 16 und dienen der Erzielung eines sicheren Sitzes. Zum Einspannen bzw. Festklemmen des werkzeugtragenden Wechselkopfes 14 im Grundhalter verfügt der Wechselkopf, wie am besten der Fig. 2 entnommen werden kann, über einen zentralen Vorsprung 17, der vorzugsweise als einstückige Verlängerung des Zentrierzylinders 14c des Wechselkopfes 14 ausgebildet ist.

Dieser Vorsprung 17 verfügt beidseitig, also einander gegenüberleigend über nasenartig nach außen vorspringende Keilschrägen 17a, 17b, die sich also linear in Querrichtung entsprechend der Breite des Vorsprungs 17 und stets im gleichen Abstand voneinander verlaufend erstrecken. Es handelt sich hier also wohlgemerkt und ausdrücklich nicht um einen umlaufenden Ringvorsprung.

Der zentrale Vorsprung 17 ist im einstückigen Übergang als Ansatz des Zentrierzylinders 14c des Wechselkopfes 14 ausgebildet; die Keilschrägen 17a, 17b sind dadurch gebildet, daß der zentrale Vorsprung 17 sich nach außen gesehen zunächst im flacheren Winkel beidseitig verjüngt und anschließend wieder im steilen Winkel nach außen nasenartig vorspringend und hierdurch die Keilschrägen bildend verbreitert, wobei der Winkel $\alpha$ zur Senkrechten vorzugsweise im Bereich von etwa 30° liegt, ohne daß die Erfindung hierdurch auf diese Winkelgröße eingeschränkt wird.

Der Aufnahmekopf 13 des Grundhalters verfügt seinerseits über in einer Querbohrung 18 gleitverschieblich gelagerte beidseitige Spannmuttern 19a, 19b, wobei die Spannmutter 19b in Fig. 1 lediglich gestrichelt angedeutet ist.

Die Spannmuttern 19a, 19b verfügen jeweils über ein Innengewinde, in denen ein vorzugsweise gemeinsamer Spannbolzen mit dann entsprechenden, jedoch gegenläufigen Außengewinden sitzt, so daß eine gemeinsame Betätigung der Spannmuttern 19a, 19b durch Verdrehen des Spannbolzens 20 möglich ist.

Erkennbar erfolgt daher die axiale Verspannung und Sicherung des in dem Grundhalter 11 eingesetzten Wechselkopfes 14 dadurch, daß nach Einsetzen und Plananlage der Spannbolzen 30 so verdreht wird, daß sich beide Spannmuttern 20 in Richtung auf den zentralen Vorsprung 17 und entsprechend auf die Keilschrägen 17a, 17b zubewegen. Hierzu verfügt jede der Spannmuttern auf der den Keilschrägen 17a, 17b zugewandten Seite über einen Keilvorsprung 21, der in Verbindung mit der Spannmutter so ausgebildet ist, daß eine jeweils rückwärts gerichtete Gleit- und Anlagefläche an den Keilvorsprüngen 21 der Spannschrauben 19a, 19b mit den zugewandten Keilschrägenflächen 21' zunächst in Anlage kommt und dann soweit aufeinandergleiten, bis bei entsprechend kräftigem Anziehen die so von den Spannschrauben gebildeten Spannbacken die Keilschrägen des Wechselkopfes 14 hintergreifen und diesen mit extrem hoher und ständig aufrechterhaltener Spannkraft zur Plananlage an den Grundhalter klemmen. Wechselkopf und Grundhalter sind auf diese Weise wirkungsvoll miteinander verblockt, wobei aufgrund der großflächigen gegenseitigen Berührungen der jeweils gebildeten Keilschrägen und Spannbacken entsprechend große sichere Abstützflächen und eine hervorragende Richtungsstabilität gewährleistet sind.

Man erkennt ferner, daß durch den Eingriff der Spannbacken an den zugewandten Seiten der Spannschrauben 19a, 19b in die Keilschrägen aufgrund der linearen, sich in Querrichtung erstreckenden Anlage gleichzeitig eine wirkungsvolle Verdrehsicherung gewährleistet ist, also eine starre Mitnahme des Wechselkopfes durch den Grundhalter bei entsprechend guter Stützwirkung, die auch schwere und schwerste Zerspanungsarbeit ermöglicht.

Eine weitere, durch diese Verankerungsform ermöglichte Ausgestaltung vorliegender Erfindung besteht darin, daß aufgrund des Verzichts jeglicher beweglicher Teile am Wechselkopf bzw. an dessen sonst notwendigen, axialen Querbohrungen stattdessen eine axiale Längsbohrung zentral den zentralen Vorsprung 17 und den Zentrierzylinder 14c bis zur Öffnung der Werkzeugaufnahme durchsetzend, angeordnet werden kann, die das Bezugszeichen 22 trägt. In dieser zentralen rückwärtigen Längsbohrung befindet sich ein Innengewinde zur Aufnahme einer Stellschraube 23, die dann in ihren axialen Position durch externe Handhabung von rückwärts, also durch die offene Bohrung im zentralen Vorsprung 17 in der Zeichenebene von rechts, beispielsweise durch einen Schraubendreher oder durch Einsatz eines Inbusschraubenwerkzeugs, verstellt werden kann.

Hierdurch bietet sich der besondere Vorteil an, daß durch Verschleiß in seiner genauen Axialposition verändertes Werkzeug vom Grundhalter und der Werkzeugma schine getrennt im Wechselkopf 14 neu axial justiert werden kann, während die Werkzeugmaschine mit einem anderen Wechselkopf gleichzeitig weiterbetrieben werden kann.

Hierzu ist es lediglich notwendig, den ausgetauschten, also vom Grundhalter 11 abgenommenen Wechselkopf in eine optische Einstellvorrichtung einzugeben, beispielsweise optische Bank o.dgl., die aus der Anschlagplanfläche 14b des Wechselkopfes ein axiales Referenzsignal gewinnt und automatisiert oder durch entsprechende Betätigung eines Einrichters die axiale Stellschraube 23 so zu betätigen ermöglicht, daß sich wieder die vorgegebene hochgenaue axiale Sollposition der Werkzeugschneidkante justieren läßt.

Ein solchermaßen voreingestellter Wechselkopf wird dann durch die Spanneinrichtung in die hochgenaue Axiallage im Grundhalter gebracht, so daß sich an der erzielten Justierung nichts ändert.

Abgesehen von den schon erwähnten Vorteilen, die durch die vorliegende Erfindung erzielt werden, ist ferner auch sichergestellt, daß die gesamte Spanneinrichtung mit entsprechend kleinen Abmessungen hergestellt werden kann und eine Verspannung durch einen einfachen Schraubvorgang am Aufnahmekopf 13 des Grundhalters ermöglicht, so daß sich die erfindungsgemäße Spanneinrichtung in besonders vorteilhafter Weise zum Einsatz bei Mehrspindel-Drehautomaten eignet.

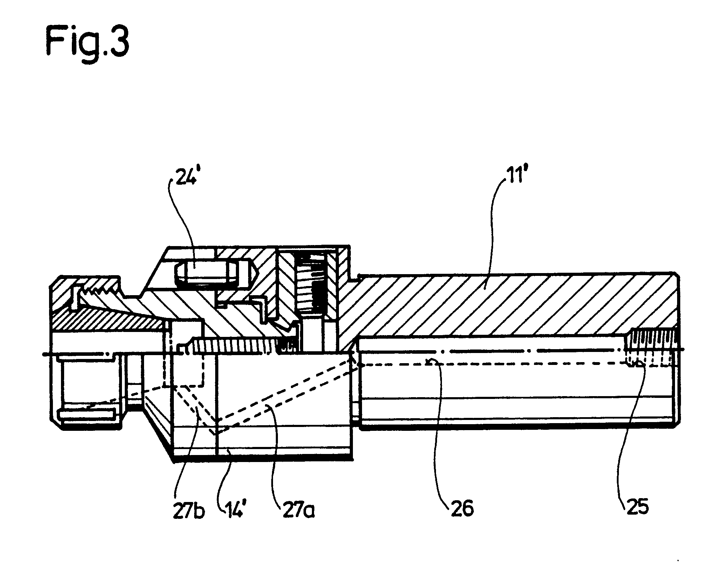

Eine bevorzugte, weitere Ausgestaltung vorliegender Erfindung ist in Fig. 3 dargestellt und ermöglicht die direkte Kühlmittelzufuhr durch Grundhalter und Wechsel halter (Zangenfutter), falls gewünscht bis in den vorderen Bereich des Zerspanungswerkzeugs.

Hierzu verfügt der Grundhalter 11' rückseitig, also maschinenseitig, über einen Kühlmittelanschluß 25, vorzugsweise in der Weise, daß ein zentraler Durchtrittskanal 26 maschinenseitig zur Bildung des Kühlmittelanschlusses ein Gewinde aufweist, also einen Rohranschluß bildet, wobei die Zufuhr des Kühlschmierstoffs durch den Grundhalter hindurch in den bei den dargestellten Ausführungsbeispielen als Zangenfutter ausgebildeten Wechselhalter oder Wechselkopf 14' erfolgt.

Dabei ist das Kühlmittel durch mindestens eine, vorzugsweise zwei Schrägbohrungen 27a - zunächst im Grundhalter 11', dann übergehend in eine entsprechend fluchtende weitere Schrägbohrung 27b im Wechselkopf 14', bewußt so geführt, daß das Kühlmittel die weiter vorn erläuterten beweglichen Klemmelemente sowie die zentrierenden Spann- und Anlageflächen nicht umspülen kann. Dies ist deshalb sinnvoll, da hierdurch vermieden wird, daß sich im Kühlmittel gegebenenfalls befindliche Spanreste und sonstige Verunreinigungen nachteilig auf die Genauigkeit der Funktionsfähigkeit der Spann- und Gewindeelemente auswirken könnten.

In der Darstellung der Fig. 3 ist lediglich eine dieser Schrägbohrungs-Verzweigungen 27a, 27b dargestellt; die andere kann sich auf der gegenüberliegenden Seite befinden, wobei es sich noch versteht, daß diese Darstellung zwar in der Zeichenebene liegen muß, allerdings der untere Teil von Grundhalter und Wechselhalter dann um 90° gedreht zu verstehen sind, so daß der gesamte Klemm- und Gewindebereich effektiv umgangen wird. Da sich durch die spezielle Art der Spannbacken-Keilschrägenverklemmung, auch in Verbindung mit dem in den Fig. 1 und 2 schon gezeigten Paßstift 24, grundsätzlich eine vorgegebene, eindeutige Position des Wechselkopfs oder Wechselhalters 14' zum Grundhalter ergibt, ist auch sichergestellt, daß die jeweiligen Schmiermittel-Austritts- bzw. -Eintrittsöffnungen an den einander angrenzenden Flächen von Grundhalter und Wechselhalter miteinander fluchten.

Der Austritt des Kühlmittels im Wechselhalter 14' kann dann, wie in der abgebildeten Ausführung, durch Schlitze einer (nicht dargestellten) Spannzange erfolgen oder kann auch, was noch vorteilhafter ist, direkt in einen beispielsweise hohlgebohrten Schaft eines geeigneten Zerspanungswerkzeugs eingeführt werden, so daß der Kühl-Schmierstoff möglichst direkt an der Werkzeugschneide austritt.

In den Fig. 1 und 2 ist der für die bei einer Annäherung der beiden Teile Grundhalter und Wechselhalter zunächst erforderlichen Ausrichtung sorgende Fixierstift als in den Wechselhalter eingeschraubter Fixierstift, also als Stift mit Gewindeansatz ausgebildet. Es kann sich als vorteilhaft erweisen, den Fixierstift auch, wie in Fig. 3 gezeigt, als Paßstift 24' mit Preßsitz einzubauen, wobei es sich versteht, daß hier noch eine Vielzahl weiterer Möglichkeiten offenstehen, zusätzlich zu den Klemmelementen die relative Verdrehsicherheit zwischen Grundhalter und Wechselhalter durch geeignete Fixierelemente vorzunehmen, wobei bei hoher zu erwartender Drehmittelübertragung auch die Fixierung über einen Nutenstein erfolgen kann.

Daher können alle in der Beschreibung, den Ansprüchen und der Zeichnung dargestellten Merkmale sowohl einzeln für sich als auch in beliebiger Kombination miteinander erfindungswesentlich sein.

**Ansprüche**

1. Werkzeugwechsel-Spanneinrichtung für Werkzeugmaschinen, Drehmaschinen u.dgl., insbesondere Mehrspindelautomaten, mit einem Grundhalter (Aufnahme) und mit einem in diesen einsetzbaren, über Plananlage und Zentrierzylinder zentriert aufgenommenen und durch formschlüssig wirkende Klemmelemente gehaltenen, das Werkstück tragenden Wechselkopf, dadurch gekennzeichnet, daß am Zentrierzylinder (14c) des Wechselkopfes (14) ein in Richtung auf den Grundhalter (11) vorspringender zentraler Spannflächenträger (Vorsprung 17) angeordnet ist und daß beidseitig auf zugeordnete Spannflächen (21′) am Spannflächenträger ausgerichtet im Grundhalter (11) diese Spannflächen hintergreifende, radial von außen nach innen in die Eingriffsposition bewegbare Spannbacken (21) gelagert sind.

2. Werkzeugwechsel-Spanneinrichtung nach Anspruch 1, dadurch gekennzeichnet, daß die von Keilschrägen (17a, 17b) am zentralen Spannflächenträger gebildeten Keilschrägenflächen (21′) im gleichen Abstand zueinander und geradlinig aus der Mitte versetzt in Querrichtung verlaufen und daß die die Keilschrägenflächen hintergreifenden Spannbacken von seitlichen Vorsprüngen (21) an Spannschrauben (19a, 19b) gebildet sind, die in Gleitquerführungen (18) im Aufnahmekopf (13) des Grundhalters (11) verschieblich gelagert sind.

3. Werkzeugwechsel-Spanneinrichtung nach Anspruch 1 oder 2, dadurch gekennzeichnet, daß zur radialen Verschiebung der Spannschrauben (19a, 19b) nach innen oder außen ein gemeinsamer Stellbolzen (20) mit gegenläufigen Außengewinden vorgesehen ist.

4. Werkzeugwechsel-Spanneinrichtung nach einem der Ansprüche 1 bis 3, dadurch gekennzeichnet, daß in einer zentralen, bis in den Bereich der Werkzeugaufnahme nach vorn reichenden, mit einem Innengewinde versehen und den zentralen, die Spannflächen tragenden Vorsprung (17) rückwärtig durchsetzenden Bohrung (22) eine die axiale Feinjustierung eines in den Wechselkopf (14) eingesetzten Schneidwerkzeugs außerhalb des Grundhalters und der Werkzeugmaschine auf einer optischen Voreinstelleinrichtung ermöglichende Stellschraube angeordnet ist.

5. Werkzeugwechsel-Spanneinrichtung nach einem der Ansprüche 1 bis 4, dadurch gekennzeichnet, daß der Wechselkopf (14) als Zangenfutter zur Aufnahme von das Werkzeug radial sichernden Spannzangen ausgebildet ist.

6. Werkzeugwechsel-Spanneinrichtung nach einem der Ansprüche 1 bis 5, dadurch gekennzeichnet, daß ein den relativen Einsetzwinkel des Wechselkopfes (14) in den Aufnahmekopf (13) des Grundhalters grob vorgebender Zentrierstift (24) vorgesehen ist, der in eine entsprechende randseitige Ausnehmung am jeweils anderen Teil eingreift.

7. Werkzeugwechsel-Spanneinrichtung nach einem der Ansprüche 1 bis 6, dadurch gekennzeichnet, daß ein Kühl-Schmiermittelanschluß (25) am Grundhalter (11′) gebildet und durch einen zentralen Kanal (26) bis zu einer weiterführenden Einmündung am Wechselkopf (14′) geführt ist derart, daß das Kühlmittel mindestens im vorderen Bereich des Wechselkopfs (14) austritt.

8. Werkzeugwechsel - Spanneinrichtung nach Anspruch 7, dadurch gekennzeichnet, daß der Verlauf des Kühlmittels im Grundhalter (11′) sowie im Wechselkopf (14′) so geführt ist, daß die im Grundhalter und Wechselkopf vorhandenen Klemm-Spann- und Gewindeelemente umgangen sind.

9. Werkzeugwechsel-Spanneinrichtung nach Anspruch 8 oder 9, dadurch gekennzeichnet, daß der zentrale Kühlmittel-Zufuhrkanal (26) im Grundhalter (11′) noch in diesem in mindestens zwei Schrägbohrungen (27a) außerhalb des Spannbacken- und Gewindebereichs übergeht, deren Ausmündungen mit den Öffnungen von ebenfalls schräg im Wechselkopf (14) nach innen verlaufenden weiterführenden Kühlmittel-Kanälen (27b) fluchten derart, daß der Austritt des Kühlmittels durch Schlitze einer im Wechselkopf (14′) angeordneten Spannzange erfolgt.

10. Werkzeugwechsel-Spanneinrichtung nach Anspruch 7 oder 8, dadurch gekennzeichnet, daß die Kühlschmierstoff-Zufuhr im Wechselkopf (14) direkt in einen hohlgebohrten Schaft eines Zerspanungswerkzeugs geführt ist derart, daß der Kühlschmierstoff-Austritt an der Werkzeugschneide erfolgt.

11. Werkzeugwechsel-Spanneinrichtung nach einem der Ansprüche 1 bis 10, dadurch gekennzeichnet, daß zur relativen Drehfixierung von Grundhalter (11, 11′) zu Wechselkopf (14, 14′) ein Fixierelement vorgesehen ist.

12. Werkzeugwechsel-Spanneinrichtung nach Anspruch 11, dadurch gekennzeichnet, daß das Fixierelement ein Stift (24) mit Gewindeansatz, ein Fixierstift (24′) oder ein Nutenstein ist.

# Fig.1

# Fig.2

# Fig.3